# EUROPEAN PATENT APPLICATION

(11) **EP 2 207 106 A2**
(43) Date of publication of application: **14.07.2010**
(21) Application number: 09179833.0
(22) Date of filing: 18.12.2009
(51) Int. Cl.: G06F 17/30

(54) **Complex relational database extraction system and method with respective based dynamic data modeling**

(30) Priority: 19.12.2008 US 139357 P
(71) Applicant: Aprimo, Incorporated, Indianapolis IN 46240 (US)
(72) Inventor: Reynolds, Michael J., Brownsburg, IN 46112 (US); Coriell, Michael L., Carmel, IN 46032 (US); Rardin, Richard A., Indianapolis, IN 46236 (US); Lawrence, John A., Carmel, IN 460333 (US); Mcdole, Michael D., Westfield, IN 46074 (US); Lothamer, Jason H., Indianapolis, IN 46254 (US); Sublette, Tim A., Indianapolis, IN 46278 (US)
(74) Representative: Tiilikainen, Jarkko Tapio

(57) **Abstract**

The present invention involves a computer for implementing a complex database management system (100). A processor (110) has at least one complex database with extraction software (108). The database extraction software is capable of creating a perspective based data model from a user selected data table (104) of the database. A query is specified by user selection of attributes from a data table of the database. A perspective based data model is created from the user selected data base table of the database and related tables. The extraction software creates a query structure defining a plurality of paths providing a selected portion of the information in the database, which is presented to the user based on the perspective based data model. The query structure defines a plurality of paths and having a plurality of nodes, each of the nodes having a corresponding operand. A downward evaluation of the query structure is performed, proceeding from a starting object down downwardly through the paths. An upward evaluation of the query structure is performed, proceeding upwardly from the bottom of each path. The operands are resolved according to predetermined rules so that the number of evaluations of the nodes is less than the number of instances of each operand in the query structure.

## Description

The present application claims the priority of U.S. Patent Provisional Application Serial Number 61/139,357, filed December 19, 2008, entitled "COMPLEX RELATIONAL DATABASE EXTRACTION SYSTEM AND METHOD WITH PERSPECTIVE BASED DYNAMIC DATA MODELING."

### BACKGROUND OF THE INVENTION

Complex relational database management software is used by organizations to assist in implementing many different business functions. Highly complex, normalized database schemas with 1,000+ tables are common for Enterprise level software. An example of such a complex database may be found in Applicant's published patent application EP1890260 A1. Such systems may create difficulties in generating reports because of chasm traps, fan traps, Cartesian products, and other SQL pitfalls which may result from the arrangement of the complex data and the nature of complex data. For example, anomalies between the processing of seemingly identical SQL (Standard Query Language) statements in certain contexts may produce incorrect or anomalous results. Sometimes such erroneous results are obvious, but in some circumstances an anomalous result may be incorrect but not obviously incorrect.

Users of complex databases desire straight-forward query mechanisms which avoid anomalous and incorrect results while generally providing useful data. Individuals who know the structure of a specific database and who are skilled in the use of SQL may structure the SQL queries to avoid the SQL pitfalls, however the average user of such databases may not be aware of the database structure or its associated SQL pitfalls.

### SUMMARY OF THE INVENTION

The present invention involves a computer system and method which implements a complex database extraction system starting with a perspective based data model which is used to populate a query structure that generally providing useful data while deterring SQL pitfalls. The computer includes a processor and at least one database having complex data. The database extraction software is capable of creating a perspective based data model from a user selected data table. The extraction software dynamically creates a data structure representing a selected portion of the information, with selected portion being presented to the user based on the perspective based data model.

A large part of a complex database management software system's value may be derived from the valuable information stored in the database. Although relational database is the standard storage mechanism for storing data captured by operational systems, the presently disclosed system typically operates on a 3^{rd} normal form relational database. While 3^{rd} normal form relational databases are optimal for processing performance and data storage, it is not optimal for retrieving large sets of data from the database which is frequently the task of users of the system. The relational structure that holds data in complex and sophisticated systems often reaches a voluminous number of tables and the task of pulling a data set together for even a relatively simple report may be daunting to the user, often requiring complex analysis and involving computationally difficult operations.

In embodiments of the present invention, related tables/objects and columns/attributes are presented to the user for selection in hierarchical tree format to build the query using a perspective based dynamic data model. The user is thus presented a limited/defined scope portion of the database that will fulfill a majority of the user's query requests. The data model is automatically built by the extraction software, and becomes the backbone of the visual representation, e.g. the hierarchical tree, presented to the user. The exact structure of the hierarchical tree varies for each possible perspective (i.e. each table/object available for selection) based on an algorithm. The algorithm utilizes a selected perspective (table/object) having cardinality based relationships to other tables/objects. The hierarchical tree is substantiated by auto-aliasing and common objects techniques and other rules, with categories being used to limit scope (ability to select a subset of available objects and relationships). This allows construction of interpretable SQL. The software does not require prompting the user for selection of a desired path or returning an error after the fact that logical SQL cannot be constructed. Instead, the user guided to desired paths when they traverse the tree and make selections.

The algorithm may be implemented by having multiple passes handled as part of the two-pass algorithm. In this embodiment, multiple paths on the downward pass are broken into separate branches and cycles are not an issue given auto-aliasing and the rule to not traverse back up paths already traversed in the downward path among other rules. Each perspective based model automatically derived is different than the single "logical" relational database model for which the database may be structured. There is at a minimum 1 dynamic data model for each table/object in the system. The dynamic generation of the perspective model obviates the creation of pre-constructed and/or static models being individually constructed as well as the enormous maintenance effort. To enhance the usefulness of the user perspective, a user may also select a category with the selection of a data table to further refine the data model for the perspective selected.

Additionally, the hierarchical attribute selection tree, further user interface logic and resulting SQL implied from selections includes additional safe handling techniques. Safe handling techniques imply the user may only select attributes and combinations of attributes that produce a logical SQL result with summaries that have integrity. Thusly, selections outside the boundaries of the scope of dynamically generated data model are unavailable. Other selections are dynamically prohibited as a result of other incompatible selections as they are made, providing protection against common SQL pitfalls such as chasm traps, fan traps, Cartesian products, etc. and "Lost data" due to inner joins is reduced.

Fact-Dimension role play (for each table/object) is also used to trim the number of attributes available at certain positions relative to the selected perspective table/object. This leverages some of the key benefits of physically segregated fact and dimension tables in an abstract manner without having to physically copy and separate the data. Fact and dimension tables are well defined concepts in Dimensional Modeling theory and are widely used in practice. They become impractical to create and maintain for every desired possibility when a very large number of tables are involved. As a result, users are generally left with only a few views into the database (granted highly optimized and highest priority). Additionally, in conjunction with the Fact-Dimension role of a table/object, measures dynamically switch to the role of dimension when they are "upward" in cardinality relative to the selected perspective table/object. This is key along with UI rules in preventing bad sums due to the "fanning" of measures (the Fan Trap mentioned above).

With an abstractly transformed view of the relational database, meta-data labels for each table/object and column/attribute may be defined. Lookups may be defined for a degree of default denormalization or abstraction unapparent to the user in the tree presented to the user for selection. The table/object may be extended with additional attributes virtually without adding physical columns to the database. Making selections from related tables/objects logically denormalizes (i.e. flattens) the data into a single record of a certain result grain. Selections may be made to further denormalize the data into what are commonly referred to as star schemas.

Embodiments of the invention enable the ability to rapidly expose tables/objects from complex relational structures in a "safe query" manner. In large part, this a dynamic data modeling tool that reduces/eliminates the effort in building data models that are typically hard-coded and defined step-by-step in some modem business intelligence software systems as part of the "meta-data or semantic" layer. The teachings of the present invention enable broad reporting across its 1,000+ table, highly normalized (and as a result highly complex) schema.

Advanced Business Intelligence software technology and prevailing theory from data warehousing is cumbersome, too time consuming and ultimately yielding impractical solutions for the problems mentioned above. Instead, the inventors developed their own solution with the strategy of leaving the data in its native, normalized format for the majority of the basic reporting needs of the complex database. To compliment this strategy, for advanced Ad Hoc analysis, interactivity and visualization, the inventors proceeded to develop a mart building feature as a further embodiment of the invention. The same engine is used to serve data to both the reporting feature and the mart feature and the two features ultimately live in a very symbiotic relationship where the mart capability is leveraged only as needed for some very specific use cases. This middleware type of solution may be implemented in several different contexts, including for example: Business Intelligence/reporting/analytics applications, full function ETL products (for denormalization and aggregation), integration products (Web Services/Adapters), enterprise application pages, segmentation engines, portals, etc.

Thus, embodiments of the present invention "unlock" data stored in a normalized form in a way that hasn't has been done before. The approach utilizes a blend of the prevailing theories of Kimball and Inmon coupled with our innovation in an abstract/dynamic/intelligent manner, eliminating a large degree of the pre-work (custom SQL in the form of views, stored procedures, ETL/Marts) necessary to get data out of relational structures. It dramatically reduces reliance on IT SQL skills, and greatly enhances (enables) a user's "self service" capabilities.

In one embodiment, the invention involves a computer for performing operations on a complex database in a database management system. The computer comprises a processor, at least one database containing information organized into multiple interdependent tables, and is characterized by a database extraction manager coupled to the processor and database. The database extraction manager is capable of creating a perspective based data model from a user selected data table, and includes software for dynamically creating a data structure representing a selected portion of the information stored in the database. The selected portion is presented to the user based on the perspective based data model.

In another embodiment, the invention involves a computer for implementing a database management system with a processor and at least one database having a plurality of tables. The system is characterized by a database extraction manager coupled to the processor and database, and being capable of creating a perspective based data model from a user selected data table of the database. The database extraction manager includes software instructions for enabling the processor to execute the method of specifying a query by user selection of a table of the database; creating a perspective based data model from the user selected data base table of the database; creating a query structure defining paths providing a selected portion of the information in the database where the selected portion being presented to the user is based on the perspective based data model.

Further embodiments of the invention are **characterized in that** the database includes tables having both dimension and measurement data, and the database extraction manager is capable of presenting possible counting and aggregation for dimension data, and possible statistical calculations of the measurement data. The database extraction manager also includes software for excluding possible counting, aggregation, and statistical calculations based on error analysis of the perspective based data model. The database extraction manager determines cardinal relationships between the user selected data table and other portions of the perspective based data model, allowing measurement data portions of the database that are upward in cardinality from the user selected data table to be treated as dimension data or selectively allowing measurement data portions of said at least one database that are downward in cardinality from the user selected data table to be hidden. SQL generation software is also included for constructing at least one SQL query corresponding to a node of the data structure representing the selected portion of the information stored in the database. The system is further characterized by reporting software that uses the SQL query to generate a report relating to the node of the data structure representing the selected portion of information stored in the database. The database extraction manager creates a plurality of nodes for the data structure representing the selected portion of the information stored in the database. In another embodiment, the SQL generation software constructs at least one SQL query for each node, each SQL query corresponding to one of the nodes of the data structure representing the selected portion of the information stored in the database. The database extraction manager may additionally selectively provide joins for inclusion in the SQL queries.

A further embodiment of the invention involves a method of using a computer to implement a complex database management system having a query system. The method is characterized by the steps of: creating a perspective based data model based on an initial selection of information from a database; displaying a user query having a plurality of operands relating to selected portion of the database, the selected portion based on the perspective based data model; creating a query structure defining a plurality of paths and having a plurality of nodes, each node having a corresponding operand; and creating a database query for resolving the user query by performing a first evaluation of the query structure, proceeding from a starting node down downwardly through the paths, and performing a second evaluation of the query structure, proceeding upwardly from the bottom of each path.

The method of the invention is further characterized by the steps of: creating a query structure defining a plurality of paths and having a plurality of nodes, each of the nodes having a corresponding operand; performing a downward evaluation of the query structure, proceeding from a starting object down downwardly through the paths; performing an upward evaluation of the query structure, proceeding upwardly from the bottom of each path; and resolving the operands according to predetermined rules. The method may be further characterized by the steps of: determining the cardinality of each of the nodes during said downward evaluation and said upward evaluation; and having the resolving step include resolving the operands according to predetermined rules wherein one of the predetermined rules includes allowing measurement data having an upward cardinality from the starting object to be resolved as dimension data. Where the complex database system includes tables having both dimension and measurement data, and the method is further characterized by the steps of presenting possible counting and aggregation for dimension data, and possible statistical calculations of the measurement data; and excluding possible counting, aggregation, and statistical calculations based on error analysis of said perspective based data model. Further aspects of the method are characterized by the step of determining cardinal relationships between the user selected data table and other portions of the perspective based data model; allowing measurement data portions of said at least one database that are upward in cardinality from the user selected data table to be treated as dimension data; and selectively providing joins for inclusion in the queries.

Another aspect of the invention is a machine-readable program storage device storing encoded instructions for the foregoing methods.

BRIEF DESCRIPTION OF THE DRAWINGS

The above mentioned and other features and objects of this invention, and the manner of attaining them, will become more apparent and the invention itself will be better understood by reference to the following description of an embodiment of the invention taken in conjunction with the accompanying drawings, wherein:

Figure 1 is a schematic diagrammatic view of an embodiment of a complex database management system of the present invention.

Figures 2A-2D are schematic tree diagrams showing the creation of a perspective based data model by an embodiment of the present invention.

Figure 3 is a flow chart diagram of the operation of an embodiment of the present invention relating to the creation of a perspective based model.

Figure 4 is a flow chart diagram of the operation of an embodiment of the present invention relating to the creation of one or more models for a report based on a user selected perspective.

Figure 5 is a schematic diagram of an embodiment of the present invention showing the interaction of middleware software.

Corresponding reference characters indicate corresponding parts throughout the several views. Although the drawings represent embodiments of the present invention, the drawings are not necessarily to scale and certain features may be exaggerated in order to better illustrate and explain the present invention. The exemplification set out herein illustrates an embodiment of the invention, in one form, and such exemplifications are not to be construed as limiting the scope of the invention in any manner.

DESCRIPTION OF EMBODIMENTS OF THE PRESENT INVENTION

The embodiments disclosed below are not intended to be exhaustive or limit the invention to the precise form disclosed in the following detailed description. Rather, the embodiments are chosen and described so that others skilled in the art may utilize their teachings.

The detailed descriptions which follow are presented in part in terms of algorithms and symbolic representations of operations on data bits within a computer memory representing alphanumeric characters or other information. These descriptions and representations are the means used by those skilled in the art of data processing arts to most effectively convey the substance of their work to others skilled in the art.

An algorithm is here, and generally, conceived to be a self consistent sequence of steps leading to a desired result. These steps are those requiring physical manipulations of physical quantities. Usually, though not necessarily, these quantities take the form of electrical or magnetic signals capable of being stored, transferred, combined, compared, and otherwise manipulated. It proves convenient at times, principally for reasons of common usage, to refer to these signals as bits, values, symbols, characters, display data, terms, numbers, or the like. It should be borne in mind, however, that all of these and similar terms are to be associated with the appropriate physical quantities and are merely used here as convenient labels applied to these quantities.

Some algorithms may use data structures for both inputting information and producing the desired result. Data structures greatly facilitate data management by data processing systems, and are not accessible except through sophisticated software systems. Data structures are not the information content of a memory, rather they represent specific electronic structural elements which impart a physical organization on the information stored in memory. More than mere abstraction, the data structures are specific electrical or magnetic structural elements in memory which simultaneously represent complex data accurately and provide increased efficiency in computer operation.

Further, the manipulations performed are often referred to in terms, such as comparing or adding, commonly associated with mental operations performed by a human operator. No such capability of a human operator is necessary, or desirable in most cases, in any of the operations described herein which form part of the present invention; the operations are machine operations. Useful machines for performing the operations of the present invention include general purpose digital computers or other similar devices. In all cases the distinction between the method operations in operating a computer and the method of computation itself should be recognized. The present invention relates to a method and apparatus for operating a computer in processing electrical or other (e.g., mechanical, chemical) physical signals to generate other desired physical signals.

The present invention also relates to an apparatus for performing these operations. This apparatus may be specifically constructed for the required purposes or it may comprise a general purpose computer as selectively activated or reconfigured by a computer program stored in the computer. The algorithms presented herein are not inherently related to any particular computer or other apparatus. In particular, various general purpose machines may be used with programs written in accordance with the teachings herein, or it may prove more convenient to construct more specialized apparatus to perform the required method steps. The required structure for a variety of these machines will appear from the description below.

The present invention deals with "object-oriented" software, and particularly with an "object-oriented" operating system. The "object-oriented" software is organized into "objects", each comprising a block of computer instructions describing various procedures ("methods") to be performed in response to "messages" sent to the object or "events" which occur with the object. Such operations include, for example, the manipulation of variables, the activation of an object by an external event, and the transmission of one or more messages to other objects.

Messages are sent and received between objects having certain functions and knowledge to carry out processes. Messages are generated in response to user instructions, for example, by a user activating an icon with a "mouse" pointer generating an event. Also, messages may be generated by an object in response to the receipt of a message. When one of the objects receives a message, the object carries out an operation (a message procedure) corresponding to the message and, if necessary, returns a result of the operation. Each object has a region where internal states (instance variables) of the object itself are stored and where the other objects are not allowed to access. One feature of the object-oriented system is inheritance. For example, an object for drawing a "circle" on a display may inherit functions and knowledge from another object for drawing a "shape" on a display.

A programmer "programs" in an object-oriented programming language by writing individual blocks of code each of which creates an object by defining its methods. A collection of such objects adapted to communicate with one another by means of messages comprises an object-oriented program. Object-oriented computer programming facilitates the modeling of interactive systems in that each component of the system can be modeled with an object, the behavior of each component being simulated by the methods of its corresponding object, and the interactions between components being simulated by messages transmitted between objects.

An operator may stimulate a collection of interrelated objects comprising an object-oriented program by sending a message to one of the objects. The receipt of the message may cause the object to respond by carrying out predetermined functions which may include sending additional messages to one or more other objects. The other objects may in turn carry out additional functions in response to the messages they receive, including sending still more messages. In this manner, sequences of message and response may continue indefinitely or may come to an end when all messages have been responded to and no new messages are being sent. When modeling systems utilizing an object-oriented language, a programmer need only think in terms of how each component of a modeled system responds to a stimulus and not in terms of the sequence of operations to be performed in response to some stimulus. Such sequence of operations naturally flows out of the interactions between the objects in response to the stimulus and need not be preordained by the programmer.

Although object-oriented programming makes simulation of systems of interrelated components more intuitive, the operation of an object-oriented program is often difficult to understand because the sequence of operations carried out by an object-oriented program is usually not immediately apparent from a software listing as in the case for sequentially organized programs. Nor is it easy to determine how an object-oriented program works through observation of the readily apparent manifestations of its operation. Most of the operations carried out by a computer in response to a program are "invisible" to an observer since only a relatively few steps in a program typically produce an observable computer output.

In the following description, several terms which are used frequently have specialized meanings in the present context. The term "object" relates to a set of computer instructions and associated data which can be activated directly or indirectly by the user. The terms "windowing environment", "running in windows", and "object oriented operating system" are used to denote a computer user interface in which information is manipulated and displayed on a video display such as within bounded regions on a raster scanned video display. The terms "network", "local area network", "LAN", "wide area network", or "WAN" mean two or more computers which are connected in such a manner that messages may be transmitted between the computers. In such computer networks, typically one or more computers operate as a "server", a computer with large storage devices such as hard disk drives and communication hardware to operate peripheral devices such as printers or modems. Other computers, termed "workstations", provide a user interface so that users of computer networks can access the network resources, such as shared data files, common peripheral devices, and inter-workstation communication. Users activate computer programs or network resources to create "processes" which include both the general operation of the computer program along with specific operating characteristics determined by input variables and its environment. Similar to a process is an agent (sometimes called an intelligent agent), which is a process that gathers information or performs some other service without user intervention and on some regular schedule. Typically, an agent, using parameters typically provided by the user, searches locations either on the host machine or at some other point on a network, gathers the information relevant to the purpose of the agent, and presents it to the user on a periodic basis.

The term "complex database" relates to a multi-dimensional set of data interrelations which involves multiple relations amongst data elements to represent the data set. Such a logical arrangement may be organized into multiple interdependent tables in a database. Examples of such databases are those stored in second or third normal form (2NF or 3NF), Boyce-Codd normal form (BCNF), or higher normal forms (e.g., 4NF or 5NF). The various types of normal database forms adhere to the general precept that in each relational table, each non-key field must provide a fact about the key, relate to the whole key, and relate to nothing but the key. While these normal forms create complex databases, they also help to maintain the integrity of the database contents where contents are modified and updated. Within the database, fact (measurement data) and dimension (description data) are stored together in the various tables.

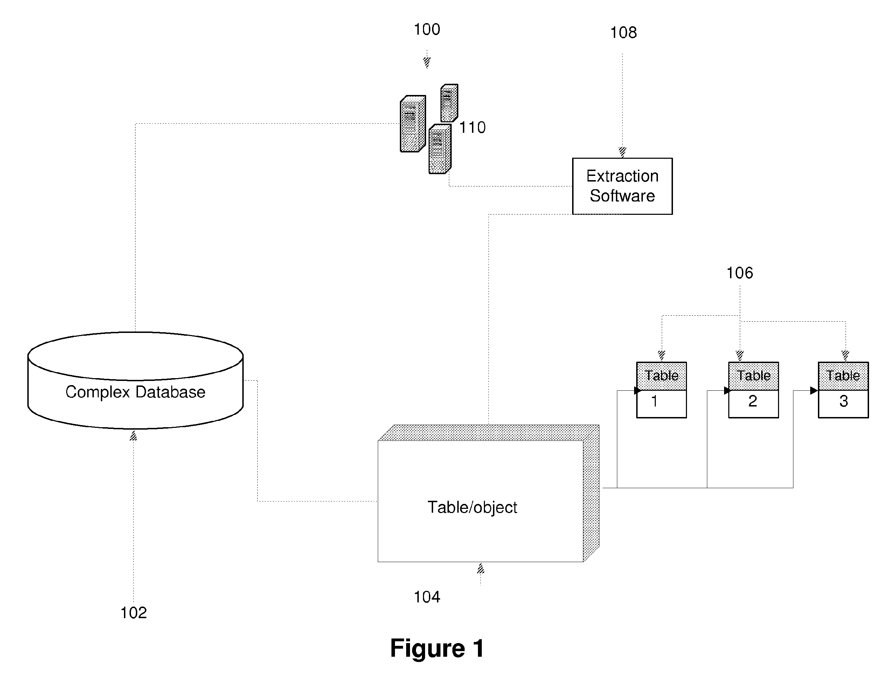

One embodiment of a system according to the present invention is shown in Figure 1. While the exemplary embodiment shows a generalized database management system, the present invention may be instantiated in many different contexts, for example in specific database applications, business process management (BPM), budgeting and forecasting, financial reporting, campaign management, etc.. Database management system 100 utilizes complex database 102 which is comprised of one or more tables/objects 104 each having a plurality of interrelated tables 106. Extraction software 108 uses tables 106 to construct and execute user queries into information stored in complex database 102. Servers 110 have processors and memory for running extraction software 108.

Other embodiments of the invention may be deployed in several different contexts. For example, extraction software 108 may alternatively be implemented in data access systems as middleware. Such middleware is oriented for integration of disparate data processing systems, including but not limited to service oriented architecture systems, web service systems, adapter systems, and XML translation systems. Further, such middleware may serve as a data supplier to end user applications including but not limited to dashboards and scorecards, Business Intelligence applications with interactive exploration and visualization, ad voc query reporting applications, data warehousing type of applications.

Relational theory, the prevailing database theory of present times, while solving data storage and integrity issues by eliminating repetition, has complicated retrieval of data for such applications. SQL (Structured Query Language), which is the ANSI standard language for creating, managing and accessing relational databases, is used to place data in and also to retrieve data from relational databases. Using the SQL language to query a relational database is a technical skill that requires significant training and generally, the technical orientation of IT personnel or even more specifically, a computer programmer. The relational databases that store data for the systems utilized by organizations posses a great deal of business critical information that can be used for insight into making better business decisions. As a result, it is the business professionals who desire to access the data from relational databases, but those business professionals typically don't have the requisite technical skills or orientation to do so. A great deal research and development has been invested in this area, attempting to remove the IT/programmer from the middle of this process, for obvious efficiency reasons. This business goal is well documented and the primary reason for the advent of conventional Business Intelligence software companies.

With that background in mind, there are several technical hurdles involved in solving this problem. As mentioned, constructing a single SQL query for each user request that can be re-used to "refresh" the data on a regular basis is the first step in becoming more efficient. This single, reusable query may be used as the data source for multiple different reports, where a report is the combination of the data query and the extra layering of formatting rules applied to the data to help user's better understand the data, such as grouping, sorting, placement of fields, formatting fields, etc. Multiple reports are often produced from a single data query.

A further aspect of solving this problem involves the mechanism that produces dynamic SQL queries based on user selections from a business oriented view of the data as opposed to the more technically cryptic database layer. This presentation layer is commonly referred to as a semantic layer or meta-data layer. Embodiments of the invention provide visualizations of the database tables and relationships that are presented in a way that allows the software to interpret the business user's requests into a SQL query without the business user specifying the SQL syntax. Generally, the meta-data description would extend beyond the scope of what could produce a single query based on the goals at hand.

In visualizing the database, there is a physical view of the tables and relationships that is usually available and inherent in its foreign key structure. This physical view of the relational database may be interpreted into numerous abstract interpretations of the database and therefore, numerous and multiple SQL queries may often be derived from a single set of tables and relationships. As the number of tables and relationships increase in a set, the more possible non-unique possibilities also increases. To narrow the possibilities down, an abstract model is used, layered between the physical structure/model and the business view utilized by the business user, to make database access requests. The abstract model/representation of the database makes a unique view, or at least reduces the number of interpretable SQL queries possible, from a single model/representation/meta-data description of the database. However, in conventional software systems the construction of these abstract models is an enormous manual effort for large databases and still requires a highly technical resource to do so.

Embodiments of the present invention use perspective as a starting point for orienting a business user's database access request. Without the perspective of the primary basis of the content (i.e. a starting point) for a single request, data base access software is often left guessing as to the information desired, or prompting the user for more information. In many cases, conventional database access software simply produces poor results that lack data integrity or are not close to what the user is really requesting. To overcome those deficiencies of conventional software, embodiments of the present invention provide Dynamic Abstract Modeling (as opposed to manual abstract modeling), wherein the Dynamic Abstract Modeling is based on the business user's indication of a starting point (i.e. the primary basis of content).

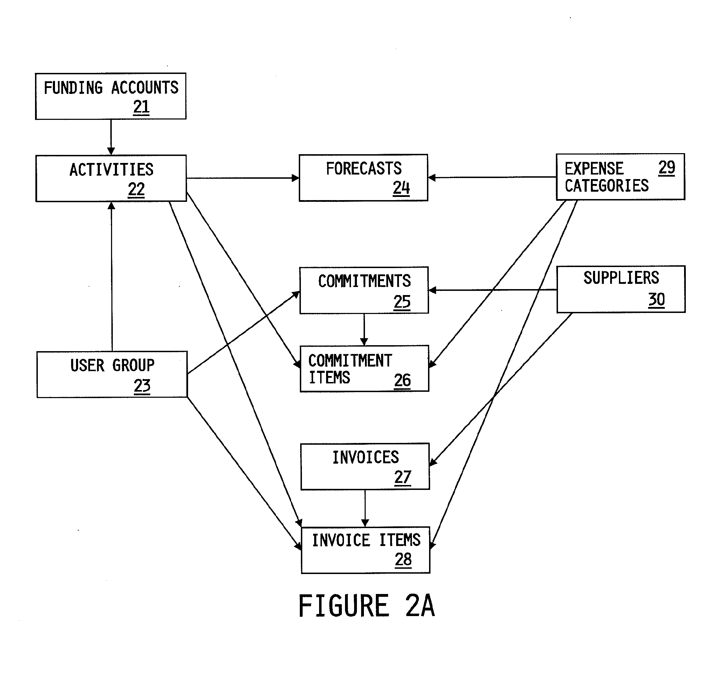

In dealing with data processing of these various functions, subsets of large databases are often selected. In several embodiments of the present invention, a technique of creating multiple data tables from a particular query syntax that is instantiated several times is termed auto-aliasing, thus creating one or more temporary copies of subsets for query operations. By creating separate subsets, many of the common anomalies/errors may be avoided. Further, using the methodology of the present invention, when a particular subset is frequently referenced under a common meaning as specified in the meta-data, the auto-aliasing function is disabled to allow for broader possible queries. Figures 2A-2D show tree representations of data models in several states processing which illustrate various stages in this process. The data models are instantiated, in one embodiment, as a tree structure that allows the user to traverse through a hierarchical tree, specify operands and nodes, and determine the output. The hierarchical tree may be constructed upon the user selection of a table, or alternatively the hierarchical tree may be constructed as the user expands nodes of the tree structure. The hierarchical tree is constructed according to rules specified by the algorithm of the invention, which appropriately limits the scope of allowable references to prevent SQL pitfalls. It is possible, and in many cases programmed, that different rules may be applied depending on the level of safety desired, and/or by the category or context selected with the starting object.

The user's perspective is based on the selection of a specific table/object within the relational database. This assumes the user has a basic understanding of the content in each table/object (definition of what a row represents = basically "the source grain"), and to some degree, the relationships between them (which relate to each other and how - i.e. which is the parent and which is the child). The user selects the perspective (table/object) that is used by extraction software 108 as the lowest point necessary within the relational model to give the user access to all of the dimensions (non-additive, generally non-numeric attributes) needed in a query relating to the selected table/object. The selected set of dimensions define the grain of the query results. This allows extraction software 108 to aggregate selected measures to a distinct list of the values across the selected dimensions (subject to criteria as described below, sometimes referred to as "aggregate assumption"). This aggregate assumption implies a common method employed by modem "ROLAP based Business Intelligence" (where "ROLAP" means Relational On-Line Analytical Processing) applications widely utilized for reporting and analytics. Ralph Kimball speaks of the general query construct in his books on Dimensional Modeling and in a basic form, it is as follows:
Select Dimensions 1-M,
Sum(Measures 1-N)
From Tables 1-X
Where Applicable Joins and
other Criteria
Group By Dimensions 1-M

Many conventional reporting tools do not employ this technique and often return data that includes sometimes undetected repetition without subsequent configuration to group and suppress unwanted repetition/detail on a report by report basis. Embodiments of the present invention may utilize a multi-pass ROLAP SQL engine to construct queries against relational databases which are organized at various degrees of normalization from a highly normalized form to less normalized forms commonly referred to snowflake or star schemas. The multi-pass engine may construct a query in a manner that maintains the integrity results based on the selected perspective (initial table/object). Conventional engines lacking this perspective generally have to guess at the user's intention for the query and frequently return less desirable results without numerous hard-coded, largely duplicated data models based on each desired perspective. Typically, being too complex, too much effort and too confusing to users to develop all the necessary models, fewer of these static models are constructed. Users attempt to use such conventional data models to fulfill the requests of multiple perspectives, which are unknown when query is implied by the user selections, often giving the user a less than desired query result.

In one embodiment of the present invention, the SQL engine employs an automated construction mechanism that builds a perspective based data model utilized to present attribute selections to the user and to construct better SQL implied by the user selections (as described in greater detail below). The multi-pass SQL constructed, is broken out into multiple statements relative the primary perspective object and in addition, joins are formed in a very specific manner directionally utilizing outer joins strategically and dynamically to return a better, more predictable result. This approach alleviates "lost data" due to inner joins in the "downward" direction of cardinality from the anchored starting perspective object/table via separate statements for everything downward. Additionally, in the upward direction, a combination of outer joins and correlated sub-selects are used.

The related tables/objects and columns/attributes presented to the user for selection in hierarchical tree format to build the query is based on a unique and dynamic data modeling technique: Perspective Based Dynamic Data Models. Thusly, upon selection of the of a table or object by the user, the user is presented a limited/defined scope portion of the database that fulfill a many of the user's potential query requests. The automatically built data model which in one embodiment is illustrated to the user as a the hierarchical tree, is presented to the user varies for each possible perspective (i.e. each table/object available for selection) based on an algorithm (2-pass algorithm) primarily utilizing: the user's elected perspective (table/object); the cardinality based relationships to other tables/objects; the selection of relevant supporting tables/objects by auto-aliasing and common objects (described in greater detail below); categories to limit scope (ability to select a subset of available objects and relationships); and algorithmic rules of query creation and validation.

Figure 2A shows the first step of an exemplary creation of a perspective based model. Note that Figures 2A-2D show only descriptive meta-data relating to the tables of database 102. Once a user (not shown) selects Activities 22 as the table upon which the perspective model is to be based, the cardinal relationships are determined and, in one embodiment, displayed as part of a graphic user interface. Funding accounts 21 may have multiple Activities 22 each of which in turn may involve one of user groups 23. Activities 22 may have multiple Forecasts 24, Commitment Items 26, and Invoice Items 28. Each User Group 23 may have several related Activities 22, Commitments 25, and Invoice Items 28. Further following the cardinal relationships, each Invoice Item 28 may have several associated Invoices 27 as well as an Expense Categories 29. Expense Categories 29 may have multiple associated Forecasts 24, Commitment Items 26, and Invoice Items 28. Suppliers 30 may have multiple associated Commitments 25 and Invoices 27. Finally, each Invoice 27 and Commitment 25 has an associated Supplier 30.

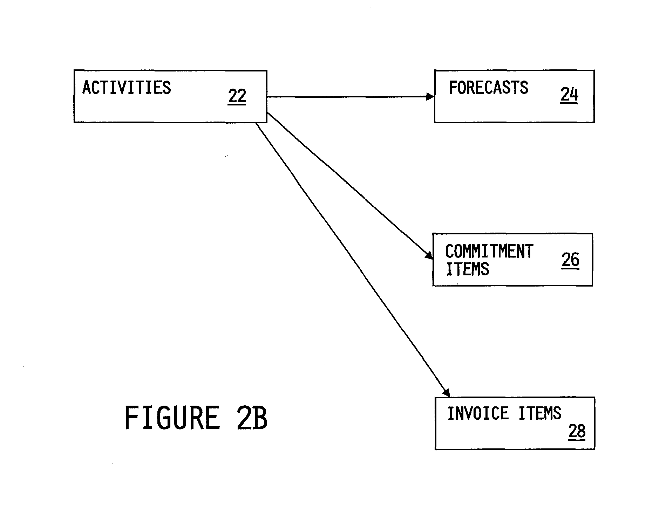

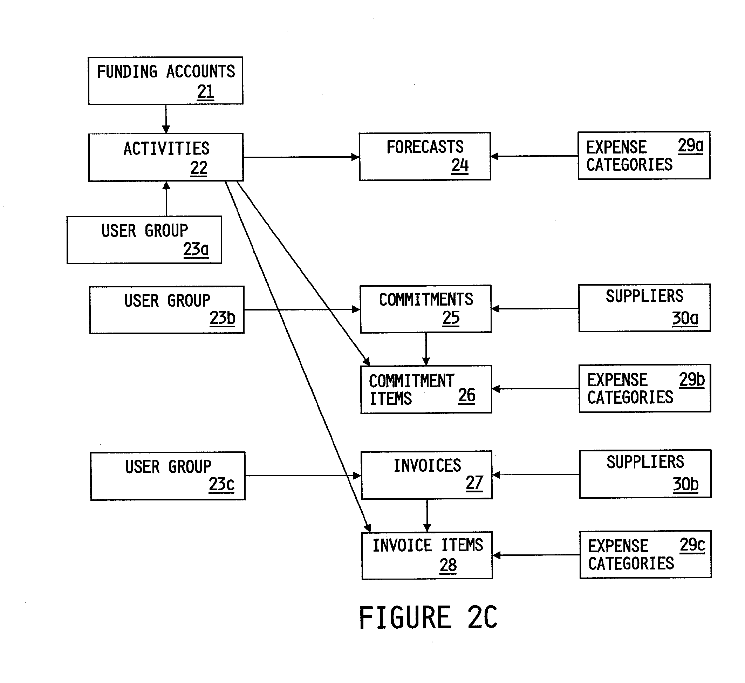

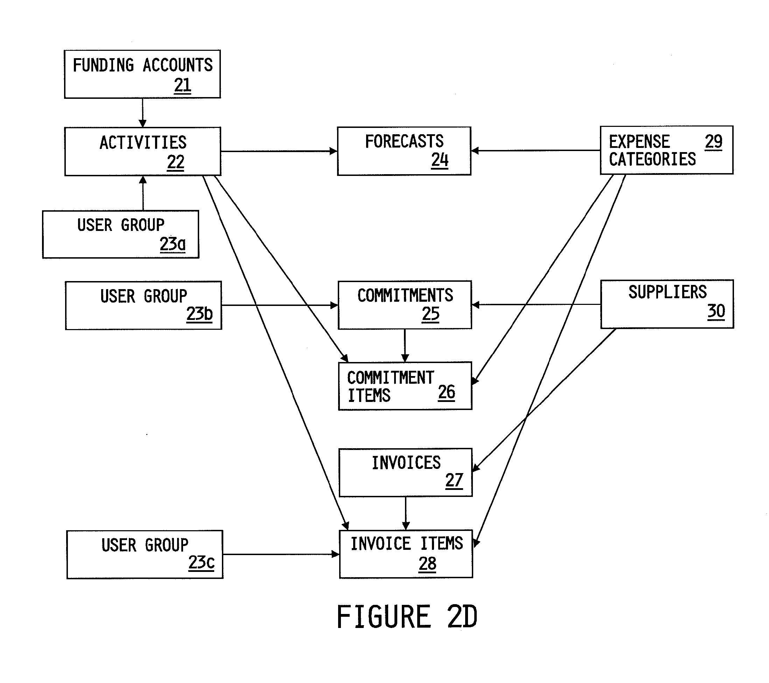

Turning to Figure 2B, Activities 22 have a first set of multiple cardinalities to Forecasts 24, Commitment Items 26, and Invoice Items 28. This is the perspective from which the potential map of tables are created. Figure 2C shows where every auto-aliased instance is shown, with User Groups 23a, 23b, and 23c; Expense Categories 29a, 29b, and 29c; and Suppliers 30a and 30b. Figure 2D shows the final model where the instances of User Groups 23a, 23b, and 23c are based on auto-aliased versions of the original User Group 23, while Expense Categories 29 and Suppliers 30 are represented as common objects. The resulting model may have Activities 22 as the starting perspective, which may include such dimensions as a Title and/or and ID number as well as fact data. The relevant measurement data relating to Activities 22 may include the Invoice Amount and Commitment Amount which may be obtained by query of corresponding fields within Invoice 27 and Commitment 25, respectively. With this perspective, the outstanding commitment of a particular instance of Activity 22 may be calculated (e.g., in a temporary table) by subtracting the Commitment Amount from the Invoice Amount. The Activities 22 may be selected or sorted by their dimension and/or measurement data, for example by the associated start date, or commitment amount, or invoice amount (or other dimension or measurement data if available). Extraction software 108 may create SQL statements with all possible dimension and measurement data possible for selection by the user, although the user may opt to only specify certain data for selection of records of interest. Extraction software 108 then creates a SQL selection of relevant records from Activities 22 and use that information to further create SQL selections from Invoice 27 and Commitment 25 based on the parameters specified by the user in the report as defined by the user. With certain dimension data, only aggregation and counting may be possible, whereas with measurement data summation and other statistical information may be calculated.

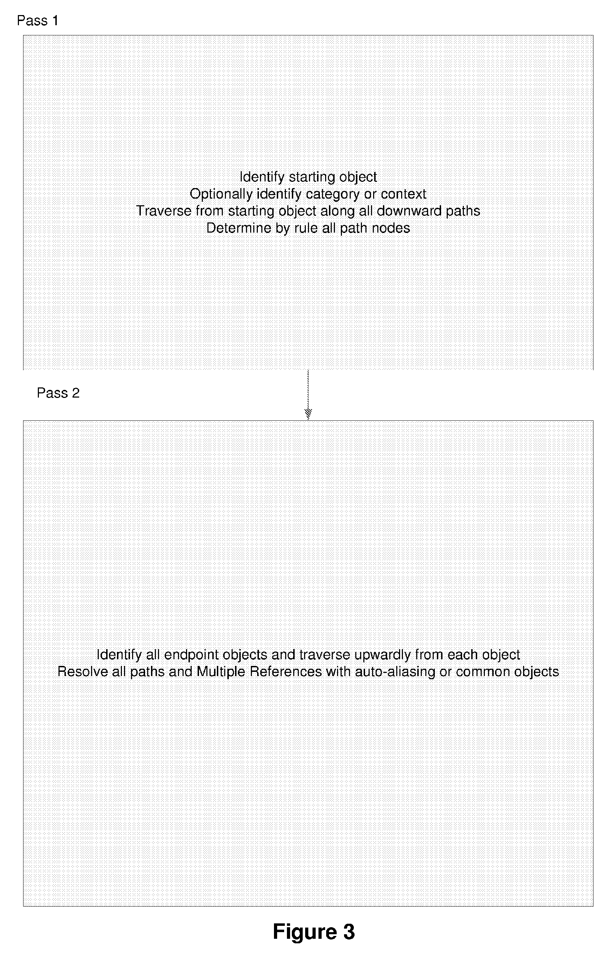

In one embodiment of the invention, step 404 in implemented with a graphic user interface showing the various aggregation, counting, and statistical selections that may be made by the user, wherein those selections have been tested as described in greater detail below in relation to Figure 3 and related discussions. This construction of interpretable SQL does not require prompting of the user for selection of a desired path or returning an error after the user desired path selection when that logical SQL is incapable of being constructed. With embodiments of the present invention, the user is presented all desirable paths when the user traverses the tree and make selection, and the potentially problematic paths are omitted. Each perspective based model automatically derived is typically different than the single "logical" relational database model based on the rules above. There is at a minimum 1 dynamic data model for each table/object in the system.

Multiple paths and cycles are handled as part of the two-pass algorithm (as described in conjunction with Figure 3 below), where multiple paths on the downward pass are broken into separate branches and cycles are not an issue given auto-aliasing and the rule to not traverse back up paths already traversed in the downward path among other rules. As stated above, other tools require pre-constructed/static models painfully constructed 1-by-1. The result of the two-pass algorithm is an attribute selection tree, which is presented with further User Interface logic and the resulting SQL implied from the user selections are pre-processed by extraction software 108 to ensure safe handling techniques with the resulting SQL query. Such safe handling techniques imply the user may only select attributes and combinations of attributes that produce a logical SQL result with summaries that have integrity. Selections outside the boundaries of the scope of dynamically created data model (as disclosed above) are unavailable to the user. Other potentially erroneous selections are dynamically prohibited as a result of other incompatible selections as they are replaced by Common Objects (described in greater detail below) so that accurate aggregate data is proved by the SQL search results. This result is possible because the two-pass algorithm of embodiments of extraction software 108 limit the various initial paths to provide protection against common SQL pitfalls such as chasm traps, fan traps, Cartesian products that are programmatically excluded, and are thus avoided by the dynamic data model. Additionally, "Lost data" due to inner joins (as described above) is reduced.

Another aspect of embodiments of the present invention involve Fact-Dimension role play (for each table/object) which may be used to trim the number of attributes available at certain positions relative to the selected perspective table/object. This leverages some of the key benefits of physically segregated fact and dimension tables in an abstract manner without having to physically copy and separate the data. Fact and dimension tables are well defined concepts in Dimensional Modeling theory and are widely used in practice. They become impractical to create and maintain for every desired possibility when a very large number of tables are involved. As a result, in conventional systems users are generally left with only a few views into the database (granted highly optimized and highest priority). With embodiments of the present invention, extraction software 108 prevents the creation of paths that are not viable from the data model. Additionally, in conjunction with the Fact-Dimension role of a table/object, measures dynamically switch to the role of dimension when they are "upward" in cardinality relative to the selected perspective table/object, and may selectively hide fact items when they are inappropriately "downward" in cardinality-thus selectively allowing measurement data which are downward in cardinality from the user selected data table to be hidden. This rule in conjunction with User Interface rules prevent bad sums due to the "fanning" of measures (the Fan Trap mentioned above).

Thus, embodiments of the invention provide the user with an abstractly transformed view of a portion of a complex relational database for further configuration and use. Meta-data labels for each table/object and column/attribute may additionally be defined to assist in creating user navigatable views. Lookups may be defined for a degree of default denormalization or abstraction unapparent to the user in the tree presented to the user for selection. The table/object may further be extended with additional attributes virtually without adding physical columns to the database. Making selections from related tables/objects logically denormalizes (i.e. flattens) the data into a single record of a certain result grain. Selections can be made to further denormalize the data into what are commonly referred to as star schemas.

Figure 3 depicts a flow chart relating to the operation of the software creating a perspective based data model and using a representation of the data model in processing database extraction operations, comprising in this exemplary embodiment, a first pass and a second pass. Generally speaking, the fields of each table may have relationships of different cardinalities (one-to-one, one-to-many, many-to-one) with other data records in other tables. A path amongst tables relates to a single or series of relationships that logically connects two objects. Link circles are defined as multiple distinct paths between two objects. The logical connection amongst related objects may be represented as a data or query structure, for example a hierarchical tree. In the following description, the concept of traversing down a data structure such as a tree involves following a starting object along a path that is a one-to-many relationship from the starting object to the next object. The concept of traversing up a tree involves following a starting object along a path that is a many-to-one relationship from the starting object to the next object. Similarly, traversing over a tree involves following along paths having one-to-one relationships. The process of the present invention involves the extraction software using a perspective based model to build a data structure that allows the user to reference various data objects and operations, and creates a query (e.g., a SQL statement or statements) representing the set of referenced data objects, in the exemplary embodiment represented by a tree structure relationship. In the tree structure, nodes represent tables having particular fields which the user may specify operands or criteria or filtering mechanisms allowed by the data model. Using the perspective based data model, as the user chooses amongst nodes representing tables and fields. Because of the rules and other constraints of the perspective selected, the extraction software only allows the user to select the subsets of tables that are allowed by the algorithm to be referenced by each node, with the objective of the algorithm being to provide meaningful query results and deter or eliminate any SQL pitfalls in the resulting query (i.e., to improve the safety of the extraction). Where there are equivalent logical nodes, the extraction software uses rules to determine if auto-aliasing should be used or common objects created.

The First Pass of Figure 3 starts by the step of identifying a starting object. For example, with a customer based database, the starting object may be the customer table or record. Once a starting object is identified, processing continues by creating a perspective based data model which includes only those data objects and operations that are relevant to the perspective. Optionally, the user may also may have an option or be prompted to choose a category related to the data object to further refine the perspective based data model. Depending on the choices selected by the user, the generation of the perspective based data model is started, for example by expanding the model data structure. Once the user specification is complete, the extraction software traverses from the starting object along all downward paths, for example which may include an address information table, account information tables, and various other tables and data sets related to customer preference information. While traversing down the tree, the extraction software analyzes each node through the tree, and by application of rules may remove or replace any link circle routes and equivalent references. The analysis continues down each path, checking the status of each related node and its paths.

The Second Pass of Figure 3 starts by identifying all endpoint nodes then traverses upwardly from each endpoint. During the upward traversal, any Pass 1 route is disregarded. As processing continues up each path, the related object status is checked for multiple references. Finally, the software resolves all paths and multiple references. At this point, the software may create either auto-aliased objects or common objects for the multiple referenced objects, so that in every query calling a particular multiply referenced item, an auto-alias or a common object, is included.

Once the perspective based data model is created, the user may traverse the resulting data structure, e.g. a hierarchical tree, and provide various selections, criteria and/or filtering at nodes of the data structure. With the entry of the user's desired selections and criteria, a query statement or statements are created in volatile or nonvolatile memory, for example a text string or file with the appropriate SQL statement(s).

In addition to this general methodology, specific rules may also be implemented by the software to facilitate processing. For example, it is possible that a tree relationship of a particular auto-alias and/or common object might define a circular reference. A rule may be implemented to identify such circular references and either prohibit the common object, or provide the user an opportunity to define the common object in a way that obviates the circular reference. The instances of the fields of particular tables may also be handled differently, for example some fields may have a numerical, measurable value that may be totaled and tallied within an object. Other fields may have description information (sometimes called dimensions) which is not capable of being totaled or otherwise aggregated. An object having measurable values in a particular field may only have the aggregate and not the individual data instances. Further, certain field information may be combined from several objects into a single auto-alias or common object. Thus, an auto-alias or a common object may not need to be in a normal form even though the underlying database is in a normal form.

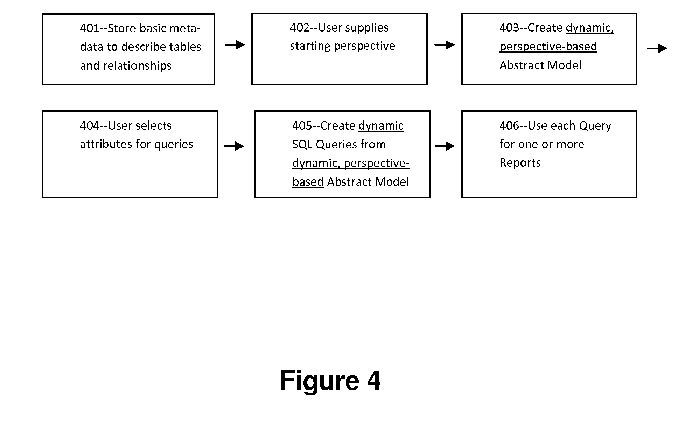

Figure 4 illustrates how the user interacts with database management system 100 to use the perspective based model. In step 401 system 100 stores meta-data or descriptive data about the tables and relationships in the complex database. This involves assigning meaningful labels to tables and relationships to allow the user to better understand the nature of the underlying data. In step 402 the user selects a starting point, typically be selecting a record or table within the complex database. Based on the starting point provided in step 402, extraction software 108 dynamically creates an abstract model of the complex database in step 403, typically displaying the model to the user with a graphic user interface. In step 404, the user selects attributes for the query or queries. In addition to any visual display, extraction software 108 also dynamically creates SQL queries from the model created in step 403 and the attributes selected in step 404. This builds the support the user to create the dynamic SQL queries in step 405, wherein extraction software 108 uses the report parameters to populate the values in the SQL statements to provide the various results of dimension data and statistics of measurement data. Finally, each query may be represented in a report created in step 406.

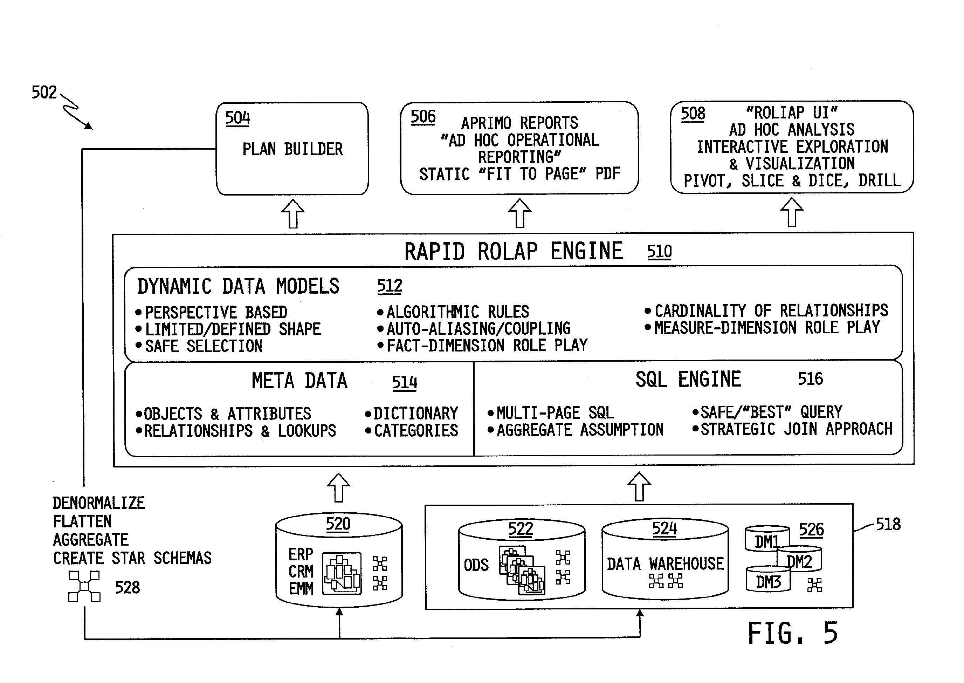

Figure 5 shows how an embodiment of the present invention may function as middleware in accessing complex data. System 502 may include user programs such as Mart builder 504, Report module 506, and Analysis engine or ROLAP UI 508, which may access complex data 518 via Rapid ROLAP Engine 510. Mart builder 504 represents, in one embodiment, a database that has the characteristics similar to a data warehouse, but is typically smaller and is focused on the data for one division or one workgroup within an enterprise, in effect providing what appears to the user to be a dedicated database to the division or workgroup while maintaining the data in a larger data store. Often, through its own segregation of data in schema 528, Mart builder 504 may denormalize, flatten, aggregate, and/or create star schemas out of subsets of complex data 518. Report module 506 represents, in one embodiment, an ad hoc reporting feature for complex database 518, while ROLAP UI 508 provides ad hoc analysis, exploration, and visualization routines to assist the user with analysis of the measurement data of complex data 518.

Engine 510 provides subsets of the complex data via dynamic data model software 512, which assists users in creating reports of complex data by use of meta data software 514 and SQL engine 516. Meta data 514 may additionally provide categories for the various types of data in complex database 518. In addition to conventional SQL features, SQL Engine 516 determines safe and desirable queries for complex data 518, as well as determining situations where data joins provide desired results. Complex data 518 may include such data stores as Enterprise software databases 520, including Enterprise Resource Planning systems, Customer Relationship Management systems, Enterprise Marketing Management systems, etc. In addition, data warehouse 524 may be included in complex database 518, having Operational Data Store 522 for frequently accessed items, and Data Management stores 526 for specialized databases.

While this invention has been described as having an exemplary design, the present invention may be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains.

## Claims

1. A computer for implementing a database management system (100), said computer comprising a processor; at least one database having a plurality of tables; and **characterized by** a database extraction manager coupled to said processor and said at least one database, said database extraction manager capable of creating a perspective based data model from a user selected data table of said at least one database, said database extraction manager including a plurality of instructions for enabling said processor to execute the method of:
specifying a query by user selection of at least one data table of said at least one database;
creating a perspective based data model from the user selected data base table of said at least one database;
creating a query structure defining a plurality of paths providing a selected portion of the information in said at least one database, said selected portion being presented to the user based on the perspective based data model.

2. A computer for performing operations on a complex database in a database management system, said computer comprising a processor(110); at least one database (102) containing information organized into multiple interdependent tables (104); and
**characterized by** a database extraction manager (108) coupled to said processor and said at least one database, said database extraction manager capable of creating a perspective based data model from a user selected data table, said database extraction manager including software for dynamically creating a data structure representing a selected portion of the information stored in said at least one database, said selected portion being presented to the user based on the perspective based data model.

3. The computer of Claim 1 or 2 **characterized in that** said at least one database includes tables having both dimension and measurement data, and said database extraction manager is capable of presenting possible results for dimension data, and possible statistical calculations of the measurement data.

4. The computer of any of the preceding Claims **characterized in that** said database extraction manager includes software for excluding possible counting, aggregation, and statistical calculations based on the creation of said perspective based data model.

5. The computer of any of the preceding Claims **characterized in that** said database extraction manager determines cardinal relationships between the user selected data table and other portions of the perspective based data model, and said database extraction manager allows measurement data portions of said at least one database that are upward in cardinality from the user selected data table to be treated as dimension data or selectively allows measurement data portions of said at least one database that are downward in cardinality from the user selected data table to be hidden.

6. The computer any of the preceding Claims **characterized in that** said database extraction manager includes SQL generation software for constructing at least one SQL query corresponding to a node of the data structure representing the selected portion of the information stored in said at least one database, and further **characterized by** reporting software, said reporting software using said at least one SQL query to generate a report relating to the node of the data structure representing the selected portion of information stored in said at least one database.

7. The computer of any of the preceding Claims **characterized in that** said database extraction manager creates a plurality of nodes for the data structure representing the selected portion of the information stored in said at least one database, said database extraction manager including SQL generation software for constructing at least one SQL query for each node, each said SQL query corresponding to one of the nodes of the data structure representing the selected portion of the information stored in said at least one database, and said database extraction manager selectively provides joins for inclusion in said SQL queries.

8. A method of using a computer to implement a complex database management system having a query system, said method **characterized by** the steps of:
creating (403) a perspective based data model based on an initial selection (402) of information from a database;
displaying (404) a user query having a plurality of operands relating to selected portion of said database, said selected portion based on the perspective based data model;
creating a query structure defining a plurality of paths and having a plurality of nodes, each said node having a corresponding operand;
creating a database query for resolving the user query by performing (Pass 1) a first evaluation of said query structure, proceeding from a starting node down downwardly through said paths, and performing (Pass 2) a second evaluation of said query structure, proceeding upwardly from the bottom of each path.

9. The method of Claim 8 further **characterized by** the steps of:
creating a query structure defining a plurality of paths and having a plurality of nodes, each of the nodes having a corresponding operand;
performing a downward evaluation of the query structure, proceeding from a starting object down downwardly through said paths;
performing an upward evaluation of said query structure, proceeding upwardly from the bottom of each path; and
resolving the operands according to predetermined rules.

10. The method of Claim 8 or 9 further **characterized by** the steps of:
determining the cardinality of each of the nodes during said downward evaluation and said upward evaluation; and
the resolving step includes resolving the operands according to predetermined rules wherein one of said predetermined rules includes allowing measurement data having an upward cardinality from the starting object to be resolved as dimension data.

11. The method of any of Claims 8-10 **characterized in that** the complex database system includes tables having both dimension and measurement data, and the method further **characterized by** the steps of presenting possible counting and aggregation for dimension data, and possible statistical calculations of the measurement data; and the step of excluding possible counting, aggregation, and statistical calculations based on error analysis of said perspective based data model.

12. The method of any of Claims 8-11 further **characterized by** the step of determining cardinal relationships between the user selected data table and other portions of the perspective based data model.

13. The method of any of Claims 8-12 further comprising the step of allowing measurement data portions of said at least one database that are upward in cardinality from the user selected data table to be treated as dimension data.

14. The method of any of Claims 8-13 further comprising the step of selectively providing joins for inclusion in the queries.

15. A machine-readable program storage device storing encoded instructions for a method of any of Claims 8-14.
